# EUROPEAN PATENT APPLICATION

(11) **EP 3 859 042 A1**
(43) Date of publication of application: **04.08.2021**
(21) Application number: 19872447.8
(22) Date of filing: 30.05.2019
(51) Int. Cl.: C22C 38/38, C21D 8/00, C21C 7/00

(54) **HIGH-STRENGTH HIGH-TOUGHNESS NON-QUENCHED AND TEMPERED ROUND STEEL AND PREPARATION METHOD**

(30) Priority: 17.10.2018 CN 201811206431
(71) Applicant: Nanjing Iron & Steel Co., Ltd., Nanjing, Jiangsu 210035 (CN)
(72) Inventor: ZHOU, Lei, Nanjing, Jiangsu 210035 (CN); LIU, Wenxue, Nanjing, Jiangsu 210035 (CN); SUN, Hua, Nanjing, Jiangsu 210035 (CN); ZHANG, Hao, Nanjing, Jiangsu 210035 (CN); TIAN, Jieping, Nanjing, Jiangsu 210035 (CN); WEI, Gangwu, Nanjing, Jiangsu 210035 (CN); YANG, Weining, Nanjing, Jiangsu 210035 (CN)
(74) Representative: Gong, Jinping
(86) International application number: PCT/CN2019/089346
(87) International publication number: WO 2020/078007

(57) **Abstract**

The invention discloses high-strength high-tenacity non-quenched-and-tempered round steel, and relates to the technical field of non-quenched-and-tempered steel. The high-strength high-tenacity non-quenched-and-tempered round steel is prepared from the following chemical components by mass percent: 0.27%-0.33% of C, 0.40%-0.70% of Si, 0.10%-0.30% of Cr, 1.30%-1.65% of Mn, 0.065%-0.100% of S, 0.005%-0.040% of Al, 0.06%-0.020% of V, 0.010%-0.040% of Ti, 0.0120%-0.0250% of N, the balance of Fe and unavoidable impurities, wherein manganese equivalent Mneq is 1.70%-2.10%. The high-strength high-tenacity non-quenched-and-tempered round steel is capable of increasing a free-cutting element S with low cost, forming dispersed distribution of a sulfide and a V (N, C) compound, through continuous uniform cooling rolling and temperature control cooling after rolling, a high-tenacity non-tempering steel bar with a good mechanical property is obtained, wherein rolled metal ballistic work reaches 190 J or more.

## Description

### TECHNICAL FIELD

The present invention relates to the technical field of non-quenched-and-tempered steel, particularly to a high-strength high-tenacity non-quenched-and-tempered round steel and a preparation method thereof.

### BACKGROUND ART

Non-quenched-and-tempered round steel is a medium-carbon low-alloy structural steel with comprehensive mechanical properties in a hot rolling state, normalized state or post-forging air-cooling state being equivalent to those in a quenched-tempered heat treatment state. This steel simplifies the production process and has less deformation and cracking, thereby reducing energy consumption and production cost. For this reason, non-quenched-and-tempered steel has received attention from various countries and has been rapidly developed and applied. The existing non-quenched-and-tempered steel improves the strength and tenacity mainly by adding a certain amount of alloying elements such as Cr, Ni or V. After searching, it has been found that the Chinese patent with the authorized announcement number CN104032214A has published "Non-quenched and tempered steel and production technology", and the Chinese patent CN106119711A has published "Non-quenched and tempered steel bar and manufacturing method thereof', which adopts a water-passing cooling method with alternation of strong cold and weak cold to reduce steel temperature and realize controlled cooling, but rolling under temperature control does not adopt a water-passing cooling method, so the production efficiency is affected and the ballistic work of the produced bars is below 120J.

### SUMMARY OF THE INVENTION

In order to solve the foregoing technical problem, the present invention provides a high-strength high-tenacity non-quenched-and-tempered round steel, which is prepared from the following chemical components by mass percent: C: 0.27%∼0.33%, Si: 0.40%∼0.70%, Cr: 0.10%-0.30%, Mn: 1.30%∼1.65%, S: 0.065%∼0.100%, Al: 0.005%∼0.040%, V: 0.06%∼0.020%, Ti: 0.010%∼0.040%, N: 0.0120%∼0.0250%, and the balance of Fe and unavoidable impurities, wherein manganese equivalent Mneq is 1.70%∼2.10%, Mneq=%Mn+0.35%Ni+1.5%Cr+2%Mo+0.17%Cu.

Technical effect: The present invention breaks through the technical bottleneck of insufficient impact toughness of non-quenched-and-tempered steel, increases a free-cutting element S with low cost, and through rolling under in-process temperature control and post-rolling cooling under temperature control, a high-tenacity non-tempering steel bar with a good mechanical property is obtained.

The present invention further delimits the following technical solution: Further, the high-strength high-tenacity non-quenched-and-tempered round steel is prepared from the following chemical components by mass percent: C: 0.27%, Si: 0.70%, Cr: 0.25%, Mn: 1.65%, S: 0.085%, Al: 0.013%, V: 0.15%, Ti: 0.030%, N: 0.0220%, and the balance of Fe and unavoidable impurities, with manganese equivalent Mneq being 2.06%.

The foregoing high-strength high-tenacity non-quenched-and-tempered round steel, which is prepared from the following chemical components by mass percent: C: 0.30%, Si: 0.65%, Cr: 0.23%, Mn: 1.58%, S: 0.090%, Al: 0.010%, V: 0.13%, Ti: 0.025%, N: 0.0200%, and the balance of Fe and unavoidable impurities, with manganese equivalent Mneq being 1.96%.

The foregoing high-strength high-tenacity non-quenched-and-tempered round steel, which is prepared from the following chemical components by mass percent: C: 0.31%, Si: 0.60%, Cr: 0.20%, Mn: 1.53%, S: 0.070%, Al: 0.015%, V: 0.14%, Ti: 0.020%, N: 0.0160%, and the balance of Fe and unavoidable impurities, with manganese equivalent Mneq being 1.87%.

The foregoing high-strength high-tenacity non-quenched-and-tempered round steel, which is prepared from the following chemical components by mass percent: C: 0.32%, Si: 0.57%, Cr: 0.18%, Mn: 1.50%, S: 0.075%, Al: 0.008%, V: 0.12%, Ti: 0.015%, N: 0.0170%, and the balance of Fe and unavoidable impurities, with manganese equivalent Mneq being 1.81%.

The foregoing high-strength high-tenacity non-quenched-and-tempered round steel, which is prepared from the following chemical components by mass percent: C: 0.33%, Si: 0.50%, Cr: 0.15%, Mn: 1.45%, S: 0.066%, Al: 0.011%, V: 0.09%, Ti: 0.015%, N: 0.0190%, and the balance of Fe and unavoidable impurities, with manganese equivalent Mneq being 1.71%.

Another object of the present invention is to provide a preparation method of the high-strength high-tenacity non-quenched-and-tempered round steel, wherein the preparation method comprises the following steps: EAF smelting →LF refining →VD vacuum treatment →continuous casting under a soft reduction process →slow cooling of the casting blank →inspection of the casting blank →heating of the continuous cast blank →descaling →blooming under heavy reduction →slow cooling in the soaking pit →intermediate billet heating →descaling →rolling under temperature control → controlled cooling →straightening →polishing →flaw detection →finished product inspection →packaging →marking →weighing →storing ,

At the step of EAF smelting: The end point carbon of the electric furnace is controlled to be greater than or equal to 0.06 %, end point phosphorus is smaller than or equal to 0.015%, oxygen content during tapping is controlled below 300PPM, eccentric bottom slag-free tapping is adopted, and during the tapping process, synthetic slag, silicon-manganese alloy and composite aluminum are added to the ladle for pre-deoxidation, and tapping slag is strictly prohibited;

At the step of LF refining: Aluminum wires are fed and aluminum particles are added to ensure that the Al content of the molten steel is greater than or equal to 0.025%, full-course argon blowing and full stirring are conducted to ensure that the white slag time is greater than or equal to 30 minutes, and in-process nitrogen blowing lasts more than 35 minutes, the Al content at the final stage of LF is 0.030%∼0.040% and S content is 0.065%∼0.090%, Si is controlled according to the middle and lower limits, and the rest is subject to point composition control according to the middle limit of judgment, and 0.5m/t∼1.5m/t Ca iron wires are fed before vacuum treatment to denature the inclusions;

At the step of VD vacuum treatment: Nitrogen blowing is conducted in the early stage of the VD station, and then is switched to argon stirring, treatment under a vacuum of less than 0.5 Torr is conducted for 12-20 minutes, the contents of Al, N, and Ti are finely adjusted, and 15-20 minutes of soft blowing is ensured after vacuum breaking;

Continuous casting is conducted under soft reduction at the solidification end of the large-section continuous casting machine, the reduction is 8mm∼20mm and the degree of superheat is 15°C∼30°C;

At the step of blooming under heavy reduction: A double-roll reversing mill is used, the maximum roll diameter is ϕ950, and the maximum reduction of a single pass is 80mm;

At the step of rolling under temperature control: The initial rolling temperature is above 950°C; after roughing and intermediate rolling, water-passing cooling is conducted and air cooling is conducted for 15∼30s; after pre-finish rolling, water-passing cooling is conducted again and air cooling is conducted for 20∼40s; the temperature when entering the finishing mill is 780°C∼850°C, the finish rolling temperature is controlled at 800°C∼850°C to realize continuous cooling rolling.

At the step of controlled cooling: After rolling, water-passing fast cooling is conducted, the temperature in the cooling bed is controlled below 700°C, the space between the bars in the cooling bed is controlled for uniform cooling, and the bars are moved down from the cooling bed below 400°C for stack cooling.

Beneficial effects of the present invention:
(1) In the present invention, the molten steel is quickly input with the help of a wire feeder, and melting and dissolution in the depth of the molten steel has effects of deoxidation, desulfurization and removal of inclusions and meanwhile can finely adjust the composition, improve the element yield and ensure composition stability;
(2) In the present invention, the large-section continuous casting machine performs continuous casting under soft reduction at the solidification end, and the degree of superheat is 15-30 °C to reduce the segregation of components, especially to avoid the segregation of sulfides;
(3) In the present invention, after roughing and intermediate rolling, water-passing cooling is conducted and the round steel is cooled in the air for 15-30s according to the layout of the production line to promote the heat in the core to be dispersed to the surface, realizing overall temperature reduction. After pre-finish rolling, the round steel passes water for cooling again and is cooled in the air for 20-40s to ensure that the surface temperature and the core temperature of the hot-rolled round steel tend to be consistent before entering the finish rolling stage;
(4) In the present invention, after rolling, water-passing fast cooling is conducted, the space between the bars in the cooling bed is controlled for uniform cooling and realization of uniform low-temperature phase change. The bars are moved down from the cooling bed below 400°C for stack cooling. From this step, a fine pearlitic ferrite structure can be obtained;
(5) The yield strength of the bars obtained in the present invention is above 620MPa, the tensile strength is above 850MPa, the elongation is greater than or equal to 19%, and the ballistic work is up to above 190J.

### DETAILED DESCRIPTION

This embodiment provides a high-strength high-tenacity non-quenched-and-tempered round steel, which is prepared from the following chemical components by mass percent: C: 0.27%∼0.33%, Si: 0.40%∼0.70%, Cr: 0.10%-0.30%, Mn: 1.30%∼1.65%, S: 0.065%∼0.100%, Al: 0.005%∼0.040%, V: 0.06%∼0.020%, Ti: 0.010%∼0.040%, N: 0.0120%∼0.0250%, and the balance of Fe and unavoidable impurities, wherein manganese equivalent Mneq is 1.70%∼2.10%, Mneq=%Mn+0.35%Ni+1.5%Cr+2%Mo+0.17%Cu.

According to the production process of the present invention, the composition of each embodiment of the steel grades in the present invention is shown in Table 1.

**Table 1: Chemical compositions of Embodiments 1 to 5 (wt%)**

| No. | C | Mn | Si | P | S | Cr | V | Ti | Al | N | Mneq |
|---|---|---|---|---|---|---|---|---|---|---|---|
| Embodiment 1 | 0.27 | 1.65 | 0.70 | 0.010 | 0.085 | 0.25 | 0.15 | 0.030 | 0.013 | 0.0220 | 2.06 |
| Embodiment 2 | 0.30 | 1.58 | 0.65 | 0.012 | 0.090 | 0.23 | 0.13 | 0.025 | 0.010 | 0.0200 | 1.96 |
| Embodiment 3 | 0.31 | 1.53 | 0.60 | 0.008 | 0.070 | 0.20 | 0.14 | 0.020 | 0.015 | 0.0160 | 1.87 |
| Embodiment 4 | 0.32 | 1.50 | 0.57 | 0.013 | 0.075 | 0.18 | 0.12 | 0.015 | 0.008 | 0.0170 | 1.81 |
| Embodiment 5 | 0.33 | 1.45 | 0.50 | 0.011 | 0.066 | 0.15 | 0.09 | 0.015 | 0.011 | 0.0190 | 1.71 |

The preparation method comprises the following steps: EAF smelting →LF refining →VD vacuum treatment →continuous casting under a soft reduction process →slow cooling of the casting blank →inspection of the casting blank →heating of the continuous cast blank →descaling →blooming under heavy reduction →slow cooling in the soaking pit →intermediate billet heating →descaling →rolling under temperature control → controlled cooling →straightening →polishing →flaw detection →finished product inspection →packaging →marking →weighing →storing, with the following parameters:

At the step of EAF smelting: The end point carbon of the electric furnace is controlled to be greater than or equal to 0.06%, end point phosphorus is smaller than or equal to 0.015%, oxygen content during tapping is controlled below 300PPM, eccentric bottom slag-free tapping is adopted, and during the tapping process, synthetic slag, silicon-manganese alloy and composite aluminum are added to the ladle for pre-deoxidation, and tapping slag is strictly prohibited;

At the step of LF refining: Aluminum wires are fed and aluminum particles are added to ensure that the Al content of the molten steel is greater than or equal to 0.025%, full-course argon blowing and full stirring are conducted to ensure that the white slag time is greater than or equal to 30 minutes, and in-process nitrogen blowing lasts more than 35 minutes, the Al content at the final stage of LF is 0.030%∼0.040% and S content is 0.065%∼0.090%, Si is controlled according to the middle and lower limits, and the rest is subject to point composition control according to the middle limit of judgment, and 0.5m/t∼1.5m/t Ca iron wires are fed before vacuum treatment to denature the inclusions;

At the step of VD vacuum treatment: Nitrogen blowing is conducted in the early stage of the VD station, and then is switched to argon stirring, treatment under a vacuum of less than 0.5 Torr is conducted for 12-20 minutes, the contents of Al, N, and Ti are finely adjusted, and 15-20 minutes of soft blowing is ensured after vacuum breaking;

At the step of continuous casting: Continuous casting is conducted under soft reduction at the solidification end of the large section continuous casting machine, the reduction is 8mm∼20mm and the degree of superheat is 15°C∼30°C to reduce the segregation of components, especially to avoid the segregation of sulfides;

At the step of blooming under heavy reduction: A double-roll reversing mill is used, the maximum roll diameter is ϕ950, and the maximum reduction of a single pass is 80mm

At the step of post-rolling controlled cooling: After roughing and intermediate rolling, water-passing cooling is conducted and the round steel is cooled in the air for 15-30s according to the layout of the production line to promote the heat in the core to be dispersed to the surface and realize overall temperature reduction. After pre-finish rolling, the round steel passes water for cooling again and is cooled in the air for 20-40s to ensure that the surface temperature and the core temperature of the hot-rolled round steel tend to be consistent before entering the finish rolling stage. The temperature when entering the finishing mill is 780°C∼850°C, the finish rolling temperature is controlled at 800°C∼850°C to realize continuous cooling rolling.

At the step of controlled cooling: After rolling, water-passing fast cooling is conducted, the temperature in the cooling bed is controlled below 700°C, the space between the bars in the cooling bed is controlled for uniform cooling, and the bars are moved down from the cooling bed below 400°C for stack cooling. From this step, a fine pearlitic ferrite structure can be obtained.

Bars in Embodiments 1 to 5 are selected for low power, inclusion control level and mechanical performance testing, and the data obtained are as shown in Table 2 to Table 4.

**Table 2: Data obtained from low-power testing of the bars in Embodiments 1 to 5**

| Embodiment | General looseness | Central looseness | Ingot shape segregation |
|---|---|---|---|
| 1 | 0.5 | 1.0 | 0.5 |
| 2 | 0.5 | 1.0 | 0 |
| 3 | 0.5 | 1.0 | 0.5 |
| 4 | 0.5 | 1.5 | 0.5 |
| 5 | 0 | 1.0 | 0.5 |

**Table 3: Data obtained from microscopic test of inclusion control level of the bars in Embodiments 1 to 5**

| Embodiment | A | | B | | C | | D | |
|---|---|---|---|---|---|---|---|---|
| | Thin | Thick | Thin | Thick | Thin | Thick | Thin | Thick |
| 1 | 2.5 | 1.5 | 0 | 0 | 0 | 0 | 0.5 | 0.5 |
| 2 | 1.5 | 1.0 | 0 | 0 | 0 | 0 | 1.0 | 0.5 |
| 3 | 2.0 | 0.5 | 0 | 0 | 0 | 0 | 0.5 | 0.5 |
| 4 | 2.0 | 1.0 | 0 | 0 | 0 | 0 | 0.5 | 0.5 |
| 5 | 2.5 | 1.0 | 0 | 0 | 0 | 0 | 0.5 | 0.5 |

In the table, A, sulfides; B, aluminum oxides; C, silicates; D, spherical oxides;

**Table 4: Data obtained from mechanical property testing of the bars in Embodiments 1 to 5**

| Embodiment | State | Rp0.2(Mpa) | Rm(MPa) | A(%) | Aku(J) |
|---|---|---|---|---|---|
| 1 | Hot rolling state | 630 | 860 | 23 | 195 |
| 2 | | 650 | 865 | 22 | 210 |
| 3 | | 637 | 870 | 22.5 | 273 |
| 4 | | 631 | 853 | 19.0 | 246 |
| 5 | | 625 | 855 | 22 | 192 |

In the table, Rm, tensile strength; Rp0.2, yield strength; Aku, impact absorbing energy; A, elongation after fracture;

**Table 5: Data obtained from grain size testing of the bars in Embodiments 1 to 5**

| Embodiment | Grain size in the hot rolling state |
|---|---|
| 1 | 9.5 |
| 2 | 9.5 |
| 3 | 10 |
| 4 | 10 |
| 5 | 10.5 |

From Tables 2 to 5, it may be known that the bars in the present invention are processed by downstream customers into hubs, control arms, rear swing arms, etc., which are used and installed in passenger cars. The test shows that the properties are good and fully meet the service requirements.

To sum up, the present invention adopts dispersed distribution of a sulfide and V (N, C) fine compound, V and Ti are combined in a trace amount, and the rolling process adopts a controlled cooling technology of water passing by sections, continuous and uniform cooling rolling and post-rolling water passing to refine the structure and significantly improve strength and impact toughness. The ballistic work of the round steel is up to above 190J, obviously higher than the value of conventional non-quenched-and-tempered steel.

In addition to the foregoing embodiments, the present invention may also have other implementation manners. All the technical solutions formed through identical replacement or equivalent transformation fall in the scope of the claims of the present invention.

## Claims

1. A high-strength high-tenacity non-quenched-and-tempered round steel, wherein the high-strength high-tenacity non-quenched-and-tempered round steel is prepared from the following chemical components by mass percent: C: 0.27%∼0.33%, Si: 0.40%∼0.70%, Cr: 0.10%-0.30%, Mn: 1.30%∼1.65%, S: 0.065%∼0.100%, Al: 0.005%∼0.040%, V: 0.06%∼0.020%, Ti: 0.010%∼0.040%, N: 0.0120%∼0.0250%, and the balance of Fe and unavoidable impurities, with manganese equivalent Mneq being 1.70%∼2.10%, Mneq= %Mn+0.35%Ni+1.5%Cr+2%Mo+0.17%Cu.

2. The high-strength high-tenacity non-quenched-and-tempered round steel according to claim 1, wherein the high-strength high-tenacity non-quenched-and-tempered round steel is prepared from the following chemical components by mass percent: C: 0.27%, Si: 0.70%, Cr: 0.25%, Mn: 1.65%, S:0.085%, Al: 0.013%, V: 0.15%, Ti: 0.030%, N: 0.0220%, and the balance of Fe and unavoidable impurities, with manganese equivalent Mneq being 2.06%.

3. The high-strength high-tenacity non-quenched-and-tempered round steel according to claim 1, wherein the high-strength high-tenacity non-quenched-and-tempered round steel is prepared from the following chemical components by mass percent: C: 0.30%, Si: 0.65%, Cr: 0.23%, Mn: 1.58%, S: 0.090%, Al: 0.010%, V: 0.13%, Ti: 0.025%, N: 0.0200%, and the balance of Fe and unavoidable impurities, with manganese equivalent Mneq being 1.96%.

4. The high-strength high-tenacity non-quenched-and-tempered round steel according to claim 1, wherein the high-strength high-tenacity non-quenched-and-tempered round steel is prepared from the following chemical components by mass percent: C: 0.31%, Si: 0.60%, Cr: 0.20%, Mn: 1.53%, S: 0.070%, Al: 0.015%, V: 0.14%, Ti: 0.020%, N: 0.0160%, and the balance of Fe and unavoidable impurities, with manganese equivalent Mneq being 1.87%.

5. The high-strength high-tenacity non-quenched-and-tempered round steel according to claim 1, wherein the high-strength high-tenacity non-quenched-and-tempered round steel is prepared from the following chemical components by mass percent: C: 0.32%, Si: 0.57%, Cr: 0.18%, Mn: 1.50%, S: 0.075%, Al: 0.008%, V: 0.12%, Ti: 0.015%, N: 0.0170%, and the balance of Fe and unavoidable impurities, with manganese equivalent Mneq being 1.81%.

6. The high-strength high-tenacity non-quenched-and-tempered round steel according to claim 1, wherein the high-strength high-tenacity non-quenched-and-tempered round steel is prepared from the following chemical components by mass percent: C: 0.33%, Si: 0.50%, Cr: 0.15%, Mn: 1.45%, S: 0.066%, Al: 0.011%, V: 0.09%, Ti: 0.015%, N: 0.0190%, and the balance of Fe and unavoidable impurities, with manganese equivalent Mneq being 1.71%.

7. A preparation method of the high-strength high-tenacity non-quenched-and-tempered round steel, wherein the preparation method comprises the following steps: EAF smelting →LF refining →VD vacuum treatment →continuous casting under a soft reduction process →slow cooling of the casting blank →inspection of the casting blank →heating of the continuous cast blank →descaling →blooming under heavy reduction →slow cooling in the soaking pit →intermediate billet heating →descaling →rolling under temperature control → controlled cooling →straightening →polishing →flaw detection →finished product inspection →packaging →marking →weighing →storing,
at the step of EAF smelting: the end point carbon of the electric furnace is controlled to be greater than or equal to 0.06%, end point phosphorus is smaller than or equal to 0.015%, oxygen content during tapping is controlled below 300PPM, eccentric bottom slag-free tapping is adopted, and during the tapping process, synthetic slag, silicon-manganese alloy and composite aluminum are added to the ladle for pre-deoxidation, and tapping slag is strictly prohibited;
at the step of LF refining: aluminum wires are fed and aluminum particles are added to ensure that the Al content of the molten steel is greater than or equal to 0.025%, full-course argon blowing and full stirring are conducted to ensure that the white slag time is greater than or equal to 30 minutes, and in-process nitrogen blowing lasts more than 35 minutes, the Al content at the final stage of LF is 0.030%∼0.040% and S content is 0.065%∼0.090%, Si is controlled according to the middle and lower limits, and the rest is subject to point composition control according to the middle limit of judgment, and 0.5m/t∼1.5m/t Ca iron wires are fed before vacuum treatment to denature the inclusions;
at the step of VD vacuum treatment: nitrogen blowing is conducted in the early stage of the VD station, and then is switched to argon stirring, treatment under a vacuum of less than 0.5 Torr is conducted for 12-20 minutes, the contents of Al, N, and Ti are finely adjusted, and 15-20 minutes of soft blowing is ensured after vacuum breaking;
continuous casting is conducted under soft reduction at the solidification end of the large-section continuous casting machine, the reduction is 8mm∼20mm and the degree of superheat is 15°C∼30°C;
at the step of blooming under heavy reduction: a double-roll reversing mill is used, the maximum roll diameter is ϕ950, and the maximum reduction of a single pass is 80mm;
at the step of rolling under temperature control: the initial rolling temperature is above 950°C; after roughing and intermediate rolling, water-passing cooling is conducted and air cooling is conducted for 15∼30s; after pre-finish rolling, water-passing cooling is conducted again and air cooling is conducted for 20∼40s; the temperature when entering the finishing mill is 780°C∼850°C, the finish rolling temperature is controlled at 800°C∼850°C to realize continuous cooling rolling.
at the step of controlled cooling: after rolling, water-passing fast cooling is conducted, the temperature in the cooling bed is controlled below 700°C, the space between the bars in the cooling bed is controlled for uniform cooling, and the bars are moved down from the cooling bed below 400°C for stack cooling.
